(19) Europäisches Patentamt
European Patent Office
Office européen des brevets

(11) Veröffentlichungsnummer: **0 063 794**
**B1**

(12) **EUROPÄISCHE PATENTSCHRIFT**

(45) Veröffentlichungstag der Patentschrift: **18.10.89**

(51) Int. Cl.⁴: **G 07 F 7/10**, H 04 L 9/02

(21) Anmeldenummer: **82103410.5**

(22) Anmeldetag: **22.04.82**

(54) **Gerät und Verfahren zur Identitätsüberprüfung.**

**Teilanmeldung 88107516 eingereicht am 10.05.88.**

(30) Priorität: **22.04.81 US 256523**

(43) Veröffentlichungstag der Anmeldung:
**03.11.82 Patentblatt 82/44**

(45) Bekanntmachung des Hinweises auf die Patenterteilung:
**18.10.89 Patentblatt 89/42**

(84) Benannte Vertragsstaaten:
**AT CH DE FR GB IT LI**

(56) Entgegenhaltungen:
**EP-A- 0 002 580**
**WO-A-81/02655**
**GB-A- 2 020 513**
**GB-A- 2 050 021**
**US-A- 4 004 089**

**PROCEEDINGS OF THE 17TH IEEE COMPUTER SOCIETY INTERNATIONAL CONFERENCE, 5.-8. September 1978, Washington, D.C., Seiten 351-353, IEEE, New York, US; M. SENDROW: "Key management in EFT networks"**
**IBM TECHNICAL DISCLOSURE BULLETIN, Band 23, Nr. 11, April 1981, Seiten 4990-4993, New York, US; R.F.**

(73) Patentinhaber: **Siemens Aktiengesellschaft, Wittelsbacherplatz 2, D-8000 München 2 (DE)**

(72) Erfinder: **Müller-Schloer, Christian, 1021 Oaklyn Ct., Voorhees New Jersey 08034 (US)**

(56) Entgegenhaltungen: (Fortsetzung)
**CANTOR et al.: "Off-line personal verification using a public-key algorithm"**
**IBM TECHNICAL DISCLOSURE BULLETIN, Band 16, Nr. 8, Januar 1974, Seiten 2539-2540, New York, US; C.D. CULLUM et al.: "Cryptographic password management system"**

**EP 0 063 794 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Gerät und ein Verfahren zur Identitätsüberprüfung eines Benutzers eines Kommunikationssystem nach dem Oberbegriff des Patentanspruchs 1 bzw. des Patentanspruchs 5.

Ein Gerät und ein Verfahren der genannten Art ist aus Proc. of the 17th IEEE Computer Society International Conference 5.–8. Sept. 1978, S. 351–353 bekannt.

Ein derartiges Gerät und Verfahren ist zur Identitätsüberprüfung durch Verwendung einer Datenkarte mit einem Schutz gegen Mißbrauch dieser Karte durch unbefugte Benutzer verwendbar.

Kunststoffkarten für unterschiedliche Typen von gespeicherten Daten sind gegenwärtig weit verbreitet im Gebrauch. Anwendungsbeispiele sind Kreditkarten und Karten, die eine Zugangskontrollinformation für automatische Schalter oder Kassenmaschinen tragen. Solche Karten werden zur Durchführung von Autorisierungen verwendet.

Diese Datenkarten sind jedoch in gewisser Weise unzulänglich:

(A) Die auf einer Karte speicherbare Datenmenge ist begrenzt. Gegenwärtig liegt die Speicherkapazität bei etwa 100 Bits.

(B) Die Speicherung ist normalerweise vom Nur-Lese-Typ.

(C) Wenn eine Karte verlorengeht, besteht nur ein minimaler Schutz gegen Mißbrauch.

Zur Überwindung dieser Unzulänglichkeiten wird eine sog. personelle Datenkarte (PDC) vorgeschlagen. Eine solche personelle Datenkarte würde eine nicht flüchtige Speichereinrichtung (beispielsweise vom RAM-Typ) aufweisen oder damit versehen sein, die eine hohe Speicherkapazität, beispielsweise mehrere Kilobits, aufweist. Diese PDC sollte auch mit einem effektiven Schutz gegen Verlust oder unbefugten Datenzugriff versehen sein. Eine solche PDC könnte für eine Vielfalt neuer Anwendungen benutzt werden.

Beispiele für eine speicherbare und für eine solche personelle Datenkarte verwendbare Informationsart sind folgende:

(a) Die PDC kann als eine elektronische ID-Karte verwendet werden, die personelle Daten, beispielsweise Name, Geburtsdatum und -ort, Höhe, soziale Sicherheitsnummer, Führerscheininformation, Paßnummer und Adresse enthalten. Die ID-Karte könnte zur Beschleunigung von Verrichtungen, beispielsweise Identifizierungen des Eigners und Ausfüllen von Formularen benutzt werden.

(b) Die PDC kann die Gesundheitsgeschichte des Eigners kombiniert mit der Information über medizinische Behandlungen, chirurgische Eingriffe, Impfungen, Allergien, Anomalien, Blutgruppe, Rhesusfaktor, usw. enthalten. Die Verfügbarkeit und schnelle Auswertung dieser Daten ist in Notfällen wichtig.

(c) Die PDC kann als persönlicher Schlüssel für Kommunikationssicherheit verwendet werden, beispielsweise den privaten Unterschriftsschlüssel enthalten.

(d) Die PDC kann als eine wiederbelastbare Kreditkarte verwendet werden. Der Kartenausgeber, beispielsweise eine Bank, lädt die Karte mit einem gewissen Geldbetrag. Bei jeder Benutzung entnimmt der Eigner einen Teil dieses Betrages. Nach dem Verbrauch des totalen Betrages wird die Karte nachgeladen.

(e) Die PDC kann als ein persönliches Notizbuch und/oder persönlicher Speicher, beispielsweise für häufig benötigte Information, wie Telefonnummern, benutzt werden.

Eine technische Ausführung einer PDC könnte auf einem magnetischen Blasenspeicherbaustein basieren. Diese Bausteine würden die oben erwähnten Unzulänglichkeiten (A) und (B) eliminieren.

Auch andere Lese/Schreibspeicher, die eine Datenspeicherung ohne eine permanente Energieversorgung ermöglichen, können benutzt werden. Die Unzulänglichkeit (C), d. h. das Problem des Schutzes der gespeicherten sensitiven, vertraulichen oder geheimen Daten gegen unbefugten Zugriff oder entsprechende Modifikation würde bleiben.

Kryptografische Prinzipien, beispielsweise zur Identitätsverifikation, sind bereits bekannt (siehe [1] bis [11]). Auf der Basis dieser kryptografischen Prinzipien können symmetrische (beispielsweise DES) und nichtsymmetrische Systeme (Kryptosysteme mit öffentlichem Schlüssel) ausgeführt werden. Symmetrische Systeme werden beispielsweise in [1] beschrieben, während nichtsymmetrische Systeme, beispielsweise in [2] bis [11] beschrieben werden.

Ein mit dem gegenwärtig bekannten Identitätsverifikationssystemen verbundenes Problem liegt in der Tatsache, daß das kartenlesende Endgerät oder Terminal an ein Kommunikationssystem angeschlossen sein kann, das gegen Unbefugte ungeschützt ist. Über ein solches Kommunikationssystem kann in der Karte enthaltene Information von einem oder mehreren Unbefugten erhalten werden. Offensichtlich sollte dies verhindert werden, weil sensitive oder sogar geheime Daten in der Karte gespeichert sein können. Ein anderes mit konventionellen Identitätsverifikationssystemen in Zusammenhang stehendes Problem bezieht sich auf Information, die in dem Endgerät nach einer Echtheitsüberprüfung gespeichert bleibt. Diese Information kann durch einen Unbefugten ausgelesen werden. Auch hier sollte wieder ein Zugriff zu sensitiver Information verhindert werden.

Literatur:

[1] National Bureau of Standards, Federal Information Processing Standard FIPS Publication 46, U. S. Department of Commerce, Washington, D. C. (Jan. 1977)

[2] M. E. Hellman, «The Mathematics of Public-Key Cryptography», Scientific American, Vol. 241, No. 2 (Aug. 1979)

[3] Rivest, Shamir, Adleman, «A Method for Obtaining Digital Signatures and Public-Key

Cryptosystems», Communications of the ACM, Vol. 21, No. 2 (Feb. 78)
[4] Needham, R. M., Schroeder, M. D., «Using Encryption for Authentication in Large Networks of Computers», Communic. ACM 21, 12 (Dec. 1978), 993–999
[5] Rabin, M., «Digitalized Signatures», Foundations of Secure Computing, R. Demillo et al., Eds., Academic Press, New York 1978
[6] Merkle, R. C., Hellman, M. E., «Hiding Information and Signatures in Trapdoor Knapsacks», IEEE Trans. Inf. Theory, Vol. IT-24, No. 5, Sept. 1978
[7] Shamir, A., «A fast Signature Scheme», MIT/LCS/TM-107, July 1978
[8] McEliece, R. J., DSN Progress Report 42–44, Jan./Feb. 1978
[9] Lagger, H., Mueller-Schloer, C., Unterberger, H., «Sicherheitsaspekte in rechnergesteuerten Kommunikationssystemen», Elektronische Rechenanlagen, Oldenbourg Verlag Munich, Dec. 1980, p. 276–280
[10] Diffie, W., Hellman, M. E., «New Directions in Cryptography», IEEE Transactions on Information Theory, Vol. IT-22, No. 6, Nov. 1976, p. 644–654
[11] Kolata, G. B., «New Codes Coming into Use», Science, Vol. 208, May 1980, p. 694–695

Bei einem Gerät und Verfahren der eingangs genannten Art kann das Kommunikationssystem ungeschützt sein und trotzdem ist die Karte gegen Unbefugte oder Eindringlinge gesichert.

Aufgabe der Erfindung ist es, ein Gerät und Verfahren der eingangs genannten Art anzugeben, bei dem die Datenkarte Daten enthalten kann, die gegen Mißbrauch zu schützen sind, das Endgerät selbst keinen Komparator enthalten muß, um zu bestimmen, ob ein autorisierter Benutzer die Karte in den Kartenleser einfügt und zusätzlich ein personelles Merkmal oder eine personelle Identifizierungsnummer zugeführt hat, und die Sicherheitsstation keine Daten des Benutzers speichern muß.

Diese Aufgabe wird durch die im kennzeichnenden Teil des Patentanspruchs 1 bzw. des Patentanspruchs 5 angegebenen Merkmale gelöst.

Vorteile des erfindungsgemäßen Geräts und Verfahren sind folgende:

a) Die in der personellen Datenkarte (PDC) enthaltenen Daten sind effektiv geschützt, weil ein Zugriff nur nach einer positiven Identitätsüberprüfung möglich ist. Dadurch ist garantiert, daß persönliche Datenkarten nur von ihren Eigentümern benutzt werden können.

b) Ein Komparator ist nicht im Endgerät, sondern in der Sicherheitsdienststation aufgenommen. Dadurch kann eine große Anzahl von Endgeräten teilnehmen. Die Folge davon ist, daß ein relativ billiges System zur kryptografischen Identitätsverifikation erhalten wird.

c) Die Sicherheitsdienststation muß keine Daten des Benutzers speichern, beispielsweise Benutzernamen und -schlüssel, weil diese Daten in einer verschlüsselten Form auf der personellen Datenkarte gespeichert werden können. Deshalb können alle Änderung der Benutzerdaten auf der Karte selbst ausgeführt werden. Es ist nicht notwendig, solche Daten in der Sicherheitsdienststation auf den neuesten Stand zu bringen.

d) Ein anderer Vorteil liegt in der Tatsache, daß irgendeine Sicherheitsdienststation, an welche das benutzte Endgerät angeschlossen ist, die Gültigkeitsüberprüfung so lange ausführen kann, wie diese Station mit dem geheimen Netzwerkschlüssel (SK.N) versehen ist. Das bedeutet, daß eine einzelne personelle Datenkarte in Verbindung mit separaten Sicherheitsdienststationen benutzt werden kann, ohne die Notwendigkeit einer Kommunikation über die personellen Merkmalen zwischen diesen Stationen. Diese Eigenschaft garantiert eine große Mobilität für den Benutzer. In anderen Worten ausgedrückt, kann der Benutzer seine oder ihre Karte an verschiedenen Stellen benutzen.

e) Bei dem erfindungsgemäßen Gerät und Verfahren ist eine unzweideutige Identitätsverifikation möglich, selbst wenn die Verbindungen zwischen dem Endgerät und dem Kommunikationssystem, welches die Sicherheitsdienststation enthält, ungeschützt ist.

f) Da keine Information in dem Endgerät verbleibt, wird wiederum eine große Mobilität für den Benutzer sichergestellt.

Darüberhinaus ermöglicht das erfindungsgemäße Gerät und Verfahren einen Zugriff zu geheimen oder sensitiven, auf einer personellen Datenkarte gespeicherten Daten mit einem Schutz gegen Mißbrauch der Karte durch unbefugte Benutzer, weist ein Endgerät dieses Geräts oder Verfahrens einen Kartenleser auf, wobei oder wodurch das Endgerät mit einem Kommunikationssystem verbunden ist, das gegen Unbefugte oder Eindringlinge ungeschützt sein kann, wobei in dem Endgerät nach einer Echtheitsüberprüfung eine Karteninformation verbleibt, und keine personelle Bezugsidentifikationsinformation auf einer permanenten Basis enthalten ist. Außerdem enthält das erfindungsgemäße Gerät oder Verfahren sowohl geheime oder sensitive Daten als auch zusätzliche persönliche Bezugsidentifikationsinformation in verschlüsselter Form und gewährleistet Schutz gegen Unbefugte, die das zur Übertragung von Nachrichten verwendete Kommunikationssystem abtasten oder abhören.

Bevorzugte und vorteilhafte Ausgestaltungen des erfindungsgemäßen Geräts gehen aus den Ansprüchen 2 bis 4 hervor.

Die Erfindung liefert eine Lösung für das Problem des Mißbrauchschutzes einer verlorenen Datenkarte. Die Erfindung benutzt die Entnahme eines persönlichen Merkmals (oder die Eingabe einer persönlichen Identifizierungsnummer) und die Verifikation (beispielsweise Fingerabdrücke oder Stimme) in Verbindung mit kryptografischen Prinzipien. Beide kryptografischen Systeme, d. h. das symmetrische (beispielsweise DES) sowie nichtsymmetrische (Kryptosysteme mit öffentlichem Schlüssel) können verwendet werden.

Die Erfindung garantiert, daß persönliche Datenkarten nur von ihren Eigentümern benutzt werden können. Es sind nicht wie bei derzeitigen Systemen leicht aufbrechbare «geheime» Notizcodes (Geburtstag, Hochzeitstag, usw.) notwendig. In dem Terminal verbleibt keine benutzerspezifische Information, wodurch volle Benutzermobilität sichergestellt ist. Die Sicherheitsdienststation muß keine Benutzernamen und -schlüssel speichern. Die Terminals können billig gehalten werden, weil der Merkmalskomparator an einer zentralen Stelle sich befindet und dadurch von vielen Terminals oder Teilnehmern benutzt werden kann.

Das erfindungsgemäße Verfahren kann bei persönlichen Zugangskontrollsystemen mit möglicherweise ungesicherten Leitungen zwischen dem Merkmalsnehmer und dem Komparator benutzt werden.

Die vorstehend angegebenen Anwendungsmöglichkeiten, Eigenschaften und Vorteile der Erfindung ergeben sich aus der nachfolgenden, eingehenderen Beschreibung eines bevorzugten Ausführungsbeispiels der Erfindung, wie es in den beigefügten Zeichnungen dargestellt ist. Von den Figuren zeigen:

Figur 1 ein Blockschaltbild eines herkömmlichen Konzepts einer Kryptografik mit öffentlichem Schlüssel;

Figur 2 ein Blockschaltbild eines Apparates mit verschiedenen Endgeräten und einer Sicherheitsdienststation, die an ein ungeschütztes Kommunikationssytem angeschlossen sind, wobei der Apparat eine Unterbrechungsüberprüfung durchführt;

Figur 3 ein Flußdiagrmm für eine Unterbrechungsüberprüfung in einem Apparat gemäß Figur 2;

Figur 4 eine persönliche Datenkarte und die darin enthaltene Information;

Figur 5 einen Apparat zur erfindungsgemäßen Identitätsverifikation; und

Figur 6 ein anderes Flußdiagramm einer Echtheitsüberprüfung in dem Apparat nach Figur 5.

Da die Erfindung ein Paar sogenannter «Netzwerkschlüssel» verwendet, wird der Begriff «Netzwerkschlüssel» zunächst erklärt. Danach wird die logische Operationsfolge einer typischen Prüfung einer personenbezogenen Datenkarte auf Gültigkeit erklärt.

In Kommunikationsnetzwerken mit einer großen Anzahl von Terminals oder Endgeräten oder Teilnehmern und mit häufig sich ändernden Verbindungen ist es oft vorteilhaft, Verschlüsselungssysteme zu benutzen, bei denen die Verschlüsselung einer Information mit einem allgemein bekannt gemachten Schlüssel, dem öffentlichen Schlüssel, erfolgt. Solche Verschlüsselungssysteme werden im folgenden kurz als Verschlüsselungssysteme mit öffentlichem Schlüssel oder öffentliche Schlüsselsysteme bezeichnet. Derartige Verschlüsselungssysteme sind in der englischsprachigen Literatur unter dem Begriff «Public Key Cryptor Systems» (PKC) bekannt (siehe beispielsweise [2] bis [11]). Zentrale Sicherheitseinrichtungen sollten, wenn sie notwendig sind, so einfach wie möglich sein. Sowohl passive als auch aktive Leitungsabtastung oder -abhörung ist in Rechnung zu stellen.

Die Figur 1 zeigt schematisch ein PKC-System oder Verschlüsselungssystem mit öffentlichem Schlüssel (siehe [2]). Zwei Stationen oder Endgeräte A und B sind über ein Kommunikationssystem CS miteinander verbunden. Die Endgeräte A und B enthalten PKC-Schlüssel- oder -kryptomodule MA bzw. MB. Diese Module MA und MB arbeiten mit einem vorbestimmten Verschlüsselungsalgorithmus Ce bzw. einem vorbestimmten Entschlüsselungsalgorithmus Cd. Das Endgerät A ist mit einem öffentlichen Schlüssel PK.A und einem geheimen Schlüssel SK.A versehen. Ähnlich ist das Endgerät B mit einem öffentlichen Schlüssel PK.B und einem geheimen Schlüssel SK.B versehen. Zum Senden einer Botschaft oder Nachricht MSG zu dem Endgerät B muß das Endgerät A den öffentlichen Schlüssel PK.B des Endgerätes B bekommen. Es verschlüsselt dann die Nachricht MSG unter diesem Schlüssel PK.B und sendet die verschlüsselte Nachricht oder das Kryptogramm {MSG} PK.B zu dem Endgerät B. In dem Endgerät B wird zum Entschlüsseln der geheime Schlüssel SK.B benutzt. Ein mit dem Kommunikationssystem CS verbundener Unbefugter X kann aus dem Kryptogramm keine klare oder verständliche Information entnehmen. Wenn der Unbefugte X aktiv wird, wenn er beispielsweise Nachrichten oder Botschaften einfügt oder -setzt, ohne daß er entdeckt wird, sind Gegenmaßnahmen erforderlich. Diese Gegenmaßnahmen umfassen die Anwendung eines öffentlichen Netzwerkschlüssels PK.N und eines geheimen Netzwerkschlüssels SK.N, wie es in der Figur 2 dargestellt ist und wie es im folgenden näher erläutert wird.

In der Figur 2 ist der Fall einer dezentralisierten Schlüsselspeicherung dargestellt. Nachdem das Endgerät B von dem Endgerät A abgefragt worden ist, überträgt das Endgerät B seinen öffentlichen Schlüssel PK.B zu dem Endgerät A. Eine passive Anzapfung oder Abhörung des Schlüssels PK.B nützt dem Unbefugten X nichts, weil er damit nicht entschlüsseln kann. Wenn der Unbefugte jedoch den Schlüssel PK.B von B durch seinen eigenen Schlüssel PK.X ersetzt, kann er die verschlüsselte Nachricht von A durch Entschlüsselung mit seinem Geheimschlüssel SK.X lesen. Das Endgerät A kann nicht unterscheiden, ob der empfangene Schlüssel von dem Endgerät B, wie angenommen, oder von dem Unbefugten X kam.

Die Lösung dieses Problems basiert auf den folgenden Annahmen:

a) es werden ein oder mehrere sogenannte «Sicherheitsdienststellen» SSS in dem Kommunikationssystem CS installiert. Die Stelle oder Station SSS befindet sich in einem physisch sicheren Bereich, beispielsweise bei einem Netzwerkknoten.

b) Die Stelle SSS verwendet ein Paar der vorstehend erwähnten «Netzwerkschlüssel» PK.N und SK.N. Der Schlüssel PK.N wird veröffentlicht. Obwohl dieser Schlüssel PK.N nicht geheim ist, muß sichergestellt werden, daß keiner irgendein Endgerät derart abschirmen kann, daß ihm der richtige Schlüssel PK.N nicht mehr zugeführt werden kann. Dies kann einfach dadurch erreicht werden, daß PK.N in den Zeitungen veröffentlicht wird.

c) Die Station oder Stelle SSS kann die folgenden einfachen Funktionen ausführen:

- Empfang einer kurzen Nachricht;
- Entschlüsselung dieser Nachricht über einen PKC-Algorithmus, welcher den geheimen Netzwerkschlüssel SK.N benutzt;
- Modifizierung der Nachricht durch Anwendung einer öffentlich bekannten Funktion (beispielsweise durch Addierung einer «1»);
- Verschlüsselung der modifizierten Nachricht und Zurücksendung dieser Nachricht zum abfragenden Endgerät;
- Meldung an einen Kontrolleur (Mensch oder Maschine), wenn irgendein Konflikt auftritt.

Es sei darauf hingewiesen, daß die Sicherheitsdienststelle SSS keinerlei extensive Speichereinrichtungen für lange Nachrichten, Teilnehmernamen oder deren öffentliche Schlüssel benötigt. Nach Figur 2 enthält die Station SSS einen PKC-Kryptomodul oder -schlüsselmodul MS, der mit dem Kommunikationssystem CS kommuniziert.

Während einer aktiven Anzapfung durch den Unbefugten oder Eindringling X wird eines der Endgeräte A, B .. notwendigerweise von dem Netzwerk CS und SSS getrennt, und zwar wenigstens während gewisser Zeitperioden. In Figur 2 ist die Trennung mit DI bezeichnet. Das Endgerät, welches als getrennt angenommen ist, könnte versuchen, eine solche Situation durch Aussenden einer Nachricht an das Netzwerk CS, SSS, beispielsweise an den nächsten Knoten, zu entdekken oder ermitteln, aber die Antworten könnten durch den Eindringling X vorgetäuscht werden. Das in der Figur 3 dargestellte Verfahren kann dies verhindern.

Gemäß dem Flußdiagramm nach Figur 3 werden folgende Schritte ausgeführt:

1. Das betroffene Endgerät (beispielsweise das Endgerät A) sendet bei zufällig ausgewählten Zeitpunkten oder Zeiten und so oft wie möglich kurze Nachrichten C.1 an die Sicherheitsdienststation SSS aus. Diese Botschaft C.1 enthält den Zeiger oder die Adresse (A) des Senders A und seinen öffentlichen Schlüssel PK.A. Da sie einmalig sein muß, enthält sie zusätzlich eine Nachrichtenzahl MNO, bestehend aus dem Zeitpunkt, Tag und einer Zufallszahl. Die Kombination (A, MNO, PK.A) wird dann unter oder mit dem öffentlichen Netzwerkschlüssel PK.N verschlüsselt, d. h.:

$$C.1 = \{A,MNO,PK.A\}\ PK.N \qquad (1)$$

Die Schreibweise «{...} PK» bedeutet eine PKC-Verschlüsselung mit dem Schlüssel PK. Diese Nachricht C.1 wird zu der Sicherheitsdienststation SSS übertragen.

2. Wenn keine Trennung DI vorkommt, wird die Nachricht C.1 von der Station SSS mit dem Schlüssel SK.N entschlüsselt. Es wird deshalb M.1 = DECR.SK.N (C.1) erhalten. Die Nachrichtenzahl MNO wird mittels einer öffentlich bekannten Funktion f in MNO′ umgewandelt und zusammen mit der Adresse SSS der Station SSS unter den öffentlichen Schlüssel PK.A des Endgerätes A verschlüsselt. Dies hat eine Nachricht C.2

$$C.2 = \{SSS,\ MNO'\}\ PK.A \qquad (2)$$

zur Folge, die zu dem Endgerät A zurückgesendet wird. Dort wird sie mit dem geheimen Schlüssel SK.A des Endgerätes A entschlüsselt.

Zur Bestimmung, ob eine Trennung DI vorherrscht, wird zum Zeitpunkt t.1 ein Zeitgeber gestartet, wenn die erste Nachricht C.1 an die Stelle SSS gesandt wird. Der Zeitgeber wird zum Zeitpunkt t.2 angehalten, wenn die zweite Nachricht C.2 von dem Endgerät A empfangen worden ist. Es wird bewertet, ob die Zeitdifferenz (t.2–t.1) innerhalb einer vorbestimmten Zeitgrenze oder -dauer liegt. Wenn nicht, wird ein Alarm ausgelöst. Wenn dies der Fall ist, wird bestimmt, ob die in dem Endgerät A bewertete Zahl f (MNO) gleich der Zahl MNO′ ist, wenn sie von der Stelle SSS empfangen wird. Wenn diese Daten nicht gleich sind, wird ein Alarm ausgelöst.

Man kann an die folgenden Angriffe denken:

1. Der Eindringling X versucht die Antwort der Stelle SSS vorzutäuschen. Dies ist unmöglich, weil der Eindringling die Nachricht C.1 nicht entschlüsseln und die Zahl MNO nicht richtig modifizieren kann.

2. Der Eindringling X empfängt die Nachricht C.1 und überreicht sie ohne Änderung über eine andere Leitung der Stelle SSS, um sie erklärt zu bekommen.

Die Stelle SSS versucht jedoch, die Antwort an die physischen Adressen der angezeigten Sender zurückzusenden und nimmt deshalb notwendigerweise wahr, daß das Endgerät A schon eine Verbindung mit einer anderen Partei hergestellt hat (der Eindringling X ist daran interessiert, nur während der Verbindungsperioden des Endgeräts A mitzuhören). Wegen der daraus resultierenden Konfliktsituation wird von der Stelle SSS ein Alarmruf an das Kontrollsystem ausgegeben.

Zur Reduzierung der Wahrscheinlichkeit einer Entdeckung muß der Eindringling X die Eindringzeit so kurz wie möglich halten. Auf der anderen Seite sollten die Endgeräte A, B, ... ihre Nachrichten oder Meldungen so oft wie möglich senden, um die Wahrscheinlichkeit einer Entdeckung zu erhöhen.

Anhand der Figuren 4 bis 6 wird das Protokoll für eine Gültigkeitskontrolle einer personenbezogenen Datenkarte (PDC) erklärt.

Nach Figur 4 enthält eine personenbezogene Datenkarte 2 sensitive und/oder geheime Information. Die in einem PDC gespeicherten Daten müssen nicht einer unbefugten Person offenbart werden und es muß auch nicht die Möglichkeit bestehen, diese Daten ohne Befugnis und ohne Entdekkung zu ändern. Die Information auf der personenbezogenen Datenkarte 2 weist folgende Struktur auf: Sie enthält den Namen des Benutzers, der durch BENUTZERNAME gekennzeichnet ist, den öffentlichen Schlüssel des Benutzers, der durch PK-BENUTZER gekennzeichnet ist und einen öffentlichen Netzwerkschlüssel PK.N. Es sei wieder angenommen, daß der öffentliche Netzwerkschlüssel PK.N publiziert worden ist. Die Karte 2 enthält des weiteren ein Bezugsmerkmal, das durch BEZUGSMERKMAL gekennzeichnet ist und einen Schlüssel eines symmetrischen Verschlüsselungssystems, insbesondere einen DES-SCHLÜSSEL oder DES-Schlüssel. Bei Benutzung eines Verfahrens mit personeller Identifikationsnummer oder Personenerkennungsnummer (PIN) würde BEZUGSMERKMAL auf der Karte 2 durch die PIN ersetzt werden. Es sei darauf hingewiesen, daß sowohl das BEZUGSMERKMAL, als auch der DES-SCHLÜSSEL mit dem öffentlichen Netzwerkschlüssel PK.N verschlüsselt sind. Demzufolge wird eine PKC-Verschlüsselung durch {...} gekennzeichnet, während eine DES-Verschlüsselung durch <...> gekennzeichnet wird. Die Karte 2 enthält schließlich geheime Daten GEHEIMDATEN, die zu schützen sind. Die GEHEIMDATEN sind mit dem DES-SCHLÜSSEL verschlüsselt. Dementsprechend enthält die Karte 2 sowohl ein nichtsymmetrisches als auch ein symmetrisches Kryptogramm.

In der Figur 5 ist ein Gerät zur Identitätsverifikation dargestellt, welches eine Datenkarte 2 benutzt. Das Gerät ist so ausgelegt, daß es einen Schutz gegen Mißbrauch der Karte 2 durch unbefugte Benutzer bietet.

Das Gerät enthält verschiedene Endgeräte 4A, 4B, ... die an ein ungeschütztes Kommunikationssystem 6 angeschlossen sind. Dieses Kommunikationssystem 6 kann beispielsweise ein Telefon- oder Rundfunknetz sein. Es kann auch ein paketvermitteltes Netzwerk oder Durchschaltenetzwerk sein. Zu solchen Kommunikationssystemen 6 haben Unbefugte leicht Zugriff. An das Kommunikationssystem 6 ist auch eine Sicherheitsdienststelle oder -station 8 angeschlossen. Die einzelnen Endgeräte 4A, 4B, ... können alle gleich ausgebildet sein. Deshalb wird nur das Endgerät 4A näher betrachtet.

Zur Herstellung eines unveränderbaren Bindegliedes zwischen dem Karteneigner und der Karte 2 wird die Information zur Personenidentifikation in das Endgerät 4A eingegeben. Das personelle Merkmal ist durch den Karteneigner 10 symbolisiert. Die personelle Verifikation kann auf die Erkennung der Stimme oder eines Fingerabdrucks basiert sein. Anstelle dessen kann es jedoch in manchen Fällen ausreichen, wenn der Karteneigner seine persönliche Identifikationszahl PIN über eine Tastatur eingibt. Unglücklicherweise können die vom Eigner 10 entnommenen persönlichen Eigenschaften nicht direkt zur Erzeugung kryptografischer Schlüssel verwendet werden, weil die resultierenden Bitmuster zu einem gewissen Grad variieren. Die Kryptoschlüssel müssen auf der anderen Seite Bit für Bit reproduzierbar sein. Zur Überwindung dieses Problems ist die Sicherheitsdienststelle 8 mit einem Komparator zum Vergleich persönlicher Merkmale mit Bezugsmerkmalen ausgestattet, wie es später erklärt wird. Wie bereits erwähnt, benutzt die Sicherheitsdienststelle 8 ein Paar Netzwerkschlüssel PK.N und SK.N.

Das Endgerät 4A ist mit einer zentralen Verarbeitungseinrichtung 12 ausgestattet, der ein Speicher 14 zugeordnet ist. Anstelle der zentralen Verarbeitungseinheit 12 und eines getrennten Speichers 14 kann ein Mikrocomputer benutzt werden. Ein Mikrokomputer oder -rechner enthält bereits einen Speicher. Die zentrale Verarbeitungseinheit 12 ist vorzugsweise ein Mikroprozessor. Der Speicher 14 wird zum Speichern eines Programms, des öffentlichen Netzwerkschlüssels PK.N und von Variablen benutzt.

Zum Lesen der Information auf der persönlichen Datenkarte 2 wird ein Kartenleser 16 benutzt. Der Kartenleser 16 ist mit der zentralen Verarbeitungseinheit 12 verbunden. Die Kartendaten werden in den Speicher 14 über die zentrale Verarbeitungseinheit 12 eingegeben. Zur Entnahme spezifischer Merkmale des Karteneigners 10 für den Speicher 14 ist ein Merkmalentnehmer 18 vorgesehen. Der Merkmalentnehmer 18 weist eine Eingabeeinrichtung, beispielsweise einen Fingerabdrucksensor, auf, die oder der in einem Verifikationsverfahren von dem Karteneigner 10 zu benutzen ist. Der Merkmalsentnehmer 18 ist auch mit der ersten zentralen Verarbeitungseinheit 12 verbunden.

Eine sehr wichtige Einheit in dem Endgerät 4A ist ein Krypto- oder Schlüsselmodul 20. Der Kryptomodul 20 ist ebenfalls mit der zentralen Verarbeitungseinheit 12 verbunden. Vorzugsweise enthält der Kryptomodul 20 zwei Einheiten, eine DES-Krypto- oder -Schlüsseleinheit und eine PKC-Kryptoeinheit. Die PKC-Einheit kann insbesondere einen Baustein enthalten, der nach der sog. RSA-Methode arbeitet, die aus [3] bekannt ist. Im allgemeinen ist zu erwähnen, daß der Kryptomodul 20 sowohl DES- als auch PKC-Algorithmen verarbeiten können sollte. Ein symmetrisches System (beispielsweise DES) ist nicht notwendig. Anstelle dessen könnte ein PKC-Algorithmus verwendet werden, ohne daß die Sicherheit des Systems beeinträchtigt würde. Der Grund für die Verwendung symmetrischer Kryptoalgorithmen ist deren hohe Geschwindigkeit. Der Kryptomodul 20 ist so ausgebildet, daß er von dem Speicher 14 unter der Kontrolle oder Steuerung der zentralen Verarbeitungseinheit 12 empfangene Daten ver- und entschlüsseln kann.

Der zentralen Verarbeitungseinheit 12 ist ein Zeitgenerator oder Zeitgeber 22 zugeordnet. Dieser Zeitgenerator wird zur Bestimmung der Zeitperiode benutzt, die zwischen der Sendung einer Nachricht und dem Empfang einer Antwortmeldung verstrichen ist, wie es später erklärt wird. Der Zeitgenerator 22 wird auch zur Bestimmung der Zeit und des Datums benutzt, die in der Nachrichtennummer NMO enthalten sind. Eine Tastatur 24 ermöglicht den Zugriff zu der Einheit 12 von außen. Eine Anzeigeeinheit 26 kann der Tastatur 22 zugeordnet sein. Mit der zentralen Verarbeitungseinheit 12 ist auch ein Zufallszahlgenerator 28 verbunden. Dieser Generator 28 wird zur Erzeugung eines zeitweiligen Schlüssels und einer

Zufallszahl verwendet, die in die Nachrichtennummer NMO aufzunehmen ist. Die zentrale Verarbeitungseinheit 12 ist mit dem Kommunikationssystem 6 über eine Kommunikationsschnittstelle 30 verbunden.

Es sei darauf hingewiesen, daß die Sicherheitsdienststelle 8 ähnlich ausgebildet oder konstruiert ist, wie das Endgerät 4A. Die Sicherheitsdienststelle 8 enthält auch eine zentrale Verarbeitungseinheit 32, die einen Speicher 34 aufweist. Der Speicher 34 wird zum Speichern eines Programms, eines geheimen Netzwerkschlüssels SK.N und von Variablen verwendet.

Ein Kryptomodul 36 ist mit der zentralen Verarbeitungseinheit 32 verbunden. Dieser Kryptomodul 36 wird zum Ver- und Entschlüsseln von Daten verwendet, die von dem zweiten Speicher 34 unter der Steuerung der zentralen Verarbeitungseinheit 32 empfangen werden. Der Kryptomodul 36 sollte die gleiche Konstruktion aufweisen, wie der Kryptomodul 20 des Endgerätes 4A.

Die zentrale Verarbeitungseinheit 32 arbeitet mit einem an ihn angeschlossenen Komparator 38 zusammen. Dieser Komparator 38 wird zum Vergleichen übertragener persönlicher Identifikationsinformation mit persönlicher Bezugsidentifikationsinformation verwendet, die ebenfalls über das Kommunikationssystem 6 übertragen wird.

In der Sicherheitsdienststelle 8 kann ebenfalls ein Zeitgenerator oder Taktgeber 40 vorgesehen sein. Dieser Zeitgenerator 40 kann ebenfalls in Zusammenhang mit der Bestimmung der zwischen ausgesandter und empfangener Nachricht verstrichenen Zeitperiode verwendet werden. Die zentrale Verarbeitungseinheit 32 ist mit dem Kommunikationssystem 6 über eine Kommunikationsschnittstelle 42 verbunden.

Der Kryptomodul 20 ist vorzugsweise so ausgebildet, daß er als ein öffentliches Schlüsselsystem arbeitet, das in seiner verschlüsselnden Betriebsweise einen öffentlichen Netzwerkschlüssel PK.N verwendet, und als ein symmetrisches System oder DES-System, das in seiner entschlüsselnden Betriebsweise einen symmetrischen Schlüssel oder -DES-Schlüssel verwendet. Der Kryptomodul 36 kann vorzugsweise so ausgebildet sein, daß er als ein öffentliches Schlüsselsystem arbeitet, das in seiner entschlüsselnden Betriebsweise einen geheimen Netzwerkschlüssel SK.N verwendet, und als ein symmetrisches System oder DES-System, das in seiner verschlüsselnden Betriebsweise den zeitweiligen symmetrischen Schlüssel oder DES-Schlüssel verwendet. Konventionellerweise ist der geheime Netzwerkschlüssel SK.N mit dem öffentlichen Netzwerkschlüssel PK.N korreliert.

Bei Abwesenheit eines Kartenbenutzers 10 sind die Endgeräte 4A, 4B, ... «leer», d. h. es sind keine Benutzerschlüssel oder Bezugsmerkmale gespeichert.

Nach dem Eingeben der persönlichen Datenkarte 2 wird der zugeordnete Modul 4A oder 4B dem spezifischen Benutzer 10 zugewiesen, wenn die Gültigkeitsüberprüfung erfolgreich ausgeführt worden ist.

In der Figur 6 ist ein Flußdiagramm dargestellt, welches zeigt, wie ein Verfahren zur Feststellung der Gültigkeit ausgeführt werden kann. Auf der linken Seite der Figur 6 sind die Tätigkeiten des Endgerätes registriert, während auf der rechten Seite der Figur 6 die Tätigkeiten der Sicherheitsdienststelle 8 beschrieben sind.

Nach Figur 6 wird ein PDC-Verfahren zur Feststellung der Gültigkeit oder Richtigkeit durch Eingabe der persönlichen Datenkarte 2 in den Kartenleser 16 und durch Aktivierung des Sensors des Merkmalsentnehmers 18 gestartet. Anstelle eines persönlichen Merkmals kann auch eine persönliche Identifizierungsnummer in das Endgerät 4A eingegeben werden. Der Kartenleser 16 liest die PDC-Information und der Merkmalsnehmer 18 nimmt von dem Karteninhaber oder -benutzer 10 ein oder mehrere persönliche Merkmale. Die von dem Kartenleser 16 gelesene Information kann vorzugsweise und wie in der Figur 4 dargestellt, sämtliche in der Karte 2 enthaltene Information aufweisen. Danach erzeugt die zentrale Verarbeitungseinheit 12 zufällig einen zeitweiligen DES-Schlüssel, der mit DES.TEMP bezeichnet ist. Zu diesem Zweck wird der Zufallszahlgenerator 28 verwendet. Dort wird auch eine Nachrichtennummer MNO erzeugt. Nun sind in dem Endgerät 4A die folgenden Daten vorhanden: Die Adresse T des die Nachricht sendenden Endgerätes 4A, das von dem Merkmalsnehmer 18 genommene MERKMAL, das Kryptogramm oder die verschlüsselte Nachricht (BEZUGSMERKMAL, DES-Schlüssel) PK.N, das oder die von der persönlichen Datenkarte 2 erhalten worden ist, die Nachrichtennummer MNO und den zeitweiligen DES-Schlüssel DES-TEMP. Diese Daten werden jetzt mit dem öffentlichen Netzwerkschlüssel PK.N verschlüsselt, so daß sie eine erste Nachricht C.1. bilden.

Die erste Nachricht C.1 wird über das Kommunikationssystem 6 zur Sicherheitsdienststelle 8 gesandt. Zu diesem Zeitpunkt wird die Zeit aus dem Zeitgenerator oder Zeitgeber 22 in den Speicher zur Bildung eines ersten Zeitpunktes T1 eingelesen.

Die erste Nachricht C.1 wird durch die Sicherheitsdienststation 8 mit dem geheimen Netzwerkschlüssel SK.N entschlüsselt. Dies wird durch den Kryptomodul 36 ausgeführt. Als Folge davon sind jetzt alle in den runden Klammern (...) der Nachricht C.1 enthaltenen Daten in der Station 8 verfügbar. Daraufhin wird geprüft, ob die empfangene Nachrichtennummer MNO in einem vorbestimmten Zeitfenster angeordnet ist. Wenn dies der Fall ist, stimmt die Nachrichtennummer MNO.

Jetzt wird das innere Kryptogramm der ersten Nachricht C.1, d. h. das Kryptogramm {BEZUGSMERKMAL, DES-NORMALSCHLÜSSEL} PK.N mit dem geheimen Netzwerkschlüssel SK.N entschlüsselt. Dadurch werden das BEZUGSMERKMAL und der DES-Schlüssel als Klardaten erhalten.

Der nächste Schritt liegt im Vergleich des übertragenen MERKMALS mit dem übertragenen BEZUGSMERKMAL. Der Vergleich wird durch den Komparator 38 ausgeführt. Solche Komparatoren

sind beispielsweise in den konventionellen PAC (Personelle Zugangssteuerungs-)-Methoden bekannt.

Wenn der Vergleich positiv ist, d. h. die Merkmale entsprechen sich innerhalb vorbestimmter Grenzen, wird eine modifizierte Nachrichtennummer MNO' erzeugt. Diese modifizierte Nachrichtennummer MNO' wird aus der übertragenen Nachrichtennummer MNO durch Anwendung einer öffentlich bekannten Funktion F erhalten.

Als ein nächster Schritt werden die folgenden Daten mit den zeitweiligen DES-Schlüssel DES.TEMP verschlüsselt: Die Adresse SSS der Sicherheitsdienststation 8, die modifizierte Nachrichtennummer MNO' und der DES-Schlüssel. Die Verschlüsselung resultiert in einer zweiten Nachricht C.2. Diese zweite Nachricht C.2 wird an das Endgerät gesandt.

Dort wird die empfangene zweite Nachricht C.2 mit dem zeitweiligen DES-Schlüssel DES.TEMP entschlüsselt. Bei der Ankunft der zweiten Nachricht C.2 wird der Zeitgenerator 22 bei einer Zeit T2 gelesen. Wenn die Zeitdifferenz T2–T1 kleiner als eine vorbestimmte Zeitdauer ist, wird bestimmt, ob die modifizierte Nachrichtennummer MNO' richtig ist. Zu diesem Zweck wird in der Station 8 die Funktion F auf die Nachrichtennummer MNO, die zuvor ausgesandt worden ist, angewandt. Dementsprechend wird die modifizierte Nummer F (MNO) erhalten. Wenn diese Nummer F (MNO) gleich der empfangenen modifizierten Nachrichtennummer MNO' ist, d. h. wenn die Prüfung positiv ist, werden die GEHEIMDATEN auf der Karte 2 mit Hilfe des DES-Schlüssels entschlüsselt. Dann wird unter Benutzung der erforderlichen GEHEIMDATEN die Operation fortgeführt.

Schließlich werden der DES-Schlüssel, alle von der pesonellen Datenkarte 2 gelesene Information und das personelle MERKMAL im Speicher 14 des Endgerätes 4A gelöscht und die Operation wird gestoppt.

Um den Anforderungen und Bestimmungen der Datensicherungsgesetze Genüge zu tun, könnten die GEHEIMDATEN durch zusätzliche Verschlüsselungen strukturiert sein, um sicherzustellen, daß nur gewisse Teile davon in einem Zeitpunkt zugänglich sind.

**Patentansprüche**

1. Gerät zur Identitätsprüfung eines Benutzers eines Kommunikationssystems, wobei ein Endgerät (4A, 4B) über das Kommunikationssystem mit einer Sicherheitsdienststation (8) zusammengeschaltet ist und zur verschlüsselten oder unverschlüsselten Eingabe von Daten dient, welche von der Sicherheitsdienststation (8) überprüfbar sind, um abhängig vom Ergebnis der Überprüfung das Endgerät (4A, 4B) für die Übertragung von Arbeitsdaten freizugeben, wobei für die Datenverschlüsselung ein öffentlicher Netzwerkschlüssel (PK.N) eingesetzt ist, der sich von einem geheimen, für die Entschlüsselung erforderlichen Netzwerkschlüssel (SK.N) unterscheidet, dadurch gekennzeichnet, daß
a) das Endgerät (4A, 4B)

a1) eine erste zentrale Verarbeitungseinrichtung (12) mit einem ersten Speicher (14) zur Speicherung eines Programms, des öffentlichen Netzwerkschlüssels (PK.N) und von Variablen,

a2) einen Kartenleser (16) zum Lesen von Daten aus einer personellen Datenkarte (2) und zur Einführung dieser Daten in den ersten Speicher (149, wobei diese Daten sensitive Daten enthalten,

a3) eine Eingabeeinrichtung (18) zur Einführung personeller Identifikationsinformation in den ersten Speicher (14) und

a4) einen Kryptomodul (20) aufweist, der mit der ersten zentralen Verarbeitungseinrichtung (12) verbunden und so ausgebildet ist, daß er von dem ersten Speicher (14) empfangene Daten unter der Steuerung der ersten zentralen Verarbeitungseinrichtung (12) ver- und entschlüsselt,
und daß
b) die Sicherheitsdienststation (8)

b1) eine zweite zentrale Verarbeitungseinrichtung (32) mit einem zweiten Speicher (34) zum Speichern eines Programms, des geheimen Netzwerkschlüssels (SK.N) und von Variablen,

b2) einen zweiten Kryptomodul (36), der mit der zweiten zentralen Verarbeitungseinrichtung (32) verbunden und so ausgebildet ist, daß er von dem zweiten Speicher (34) unter der Steuerung der zweiten zentralen Verarbeitungseinrichtung (32) erhaltene Daten ver- und entschlüsselt, und

b3) einen mit der zweiten zentralen Verarbeitungseinrichtung (32) verbundenen Komparator (38) zum Vergleichen von übertragener personeller Identifikationsinformation mit übertragener personeller Bezugsidentifikationsinformation aufweist,
und daß
c) das Kommunikationssystem (6) digitale, personelle Identifikationsbezugsinformation enthaltende Daten aus dem Endgerät (4A, 4B) zur Sicherheitsdienststation (8) und umgekehrt überträgt.

2. Gerät nach Anspruch 1, dadurch gekennzeichnet, daß der erste Kryptomodul (20) so ausgebildet ist, daß er als ein öffentliches Schlüsselsystem arbeitet, das einen öffentlichen Netzwerkschlüssel (PK.N) in seinem Verschlüsselungsmodus verwendet und als ein symmetrisches System arbeitet, das einen ersten Schlüssel (DES) und einen zeitweiligen zweiten Schlüssel (DES.TEMP) in seinem Entschlüsselungsmodus verwendet, und daß der zweite Kryptomodul (36) so ausgebildet ist, daß er als ein öffentliches Schlüsselsystem arbeitet, das einen geheimen Netzwerkschlüssel (SK.N) in seinem Entschlüsselungsmodus verwendet, und als ein symmetrisches System arbeitet, das den zeitweiligen Schlüssel (DES.TEMP) in seinem Verschlüsselungsmodus verwendet, wodurch der geheime Netzwerkschlüssel (SK.N) mit dem öffentlichen Netzwerkschlüssel (PK.N) korreliert wird.

3. Gerät nach Anspruch 2, dadurch gekennzeichnet, daß das symmetrische System ein DES-System ist, in dem der erste Schlüssel (DES) ein DES-Schlüssel ist und in dem der zeitweilige Schlüssel (DES.TEMP) ein zeitweiliger DES-Schlüssel ist.

4. Gerät nach Anspruch 2 oder 3, dadurch gekennzeichnet, daß zur Erzeugung des zeitweiligen zweiten Schlüssels (DES.TEMP) ein Zufallszahlgenerator (28) vorgesehen ist und daß der zeitweilige zweite Schlüssel (DES.TEMP) in einer verschlüsselten Form der Sicherheitsdienststation (8) zuführbar ist.

5. Verfahren zur Durchführung einer Identitätsüberprüfung eines Benutzers eines Kommunikationssystems, wobei ein Endgerät (4A, 4B) über das Kommunikationssystem mit einer Sicherheitsdienststation (8) zusammengeschaltet ist und zur verschlüsselten oder unverschlüsselten Eingabe von Daten dient, welche von der Sicherheitsdienststation (8) überprüfbar sind, um abhängig vom Ergebnis der Überprüfung das Endgerät (4A, 4B) für die Übertragung von Arbeitsdaten freizugeben, wobei für die Datenverschlüsselung ein öffentlicher Netzwerkschlüssel (PK.N) eingesetzt ist, der sich von einem geheimen, für die Entschlüsselung erforderlichen Netzwerkschlüssel (SK.N) unterscheidet, insbesondere mit einem Gerät nach einem der vorhergehenden Ansprüche, dadurch gekennzeichnet, daß

a) aus der personellen Datenkarte Karteninformation ausgelesen und Daten eines personellen Merkmals in ein Endgerät (4A, 4B) eingegeben werden, wobei die Karteninformation sowohl Daten eines Bezugsmerkmals als auch eines ersten Schlüssels enthält, wobei sowohl die Daten des Bezugsmerkmals als auch des ersten Schlüssels mit dem öffentlichen Netzwerkschlüssel (PK.N) verschlüsselt werden und dadurch ein erstes Kryptogramm gebildet wird, daß

b) in dem Endgerät (4A, 4B) ein zeitweiliger Schlüssel und eine Nachrichtennummer erzeugt werden, daß

c) die Daten des persönlichen Merkmals, das in der Karteninformation enthaltende erste Kryptogramm, die Nachrichtennummer und der zeitweilige Schlüssel in dem Endgerät (4A, 4B) mit dem öffentlichen Netzwerkschlüssel (PK.N) verschlüsselt werden und dadurch eine erste Nachricht gebildet wird, daß

d) die erste Nachricht über das Kommunikationssystem (6) zu der Sicherheitsdienststation (8) gesandt wird, daß

e) die erste Nachricht, die das erste Kryptogramm enthält, mit dem geheimen Netzwerkschlüssel (SK.N) entschlüsselt wird, wodurch der erste Schlüssel, die Nachrichtennummer, die Daten des Merkmals, die Daten des Bezugsmerkmals und der zeitweilige Schlüssel enthalten werden, wobei der geheime Netzwerkschlüssel (SK.N) mit dem öffentlichen Netzwerkschlüssel (PK.N) korreliert wird, daß

f) die Daten des Merkmals und des Bezugsmerkmals in der Sicherheitsdienststation (8) miteinander verglichen werden, daß

g) in der Sicherheitsdienststation (8) durch Anwendung einer öffentlich bekannten Funktion auf die Nachrichtennummer eine modifizierte Nachrichtennummer erzeugt wird, daß

h) in der Sicherheitsdienststation (8) die modifizierte Nachrichtennummer und der erste Schlüssel mit dem zeitweiligen Schlüssel verschlüsselt werden und dadurch eine zweite Nachricht gebildet wird, daß

i) die zweite Nachricht über das Kommunikationssystem (6) dem Endgerät (4A, 4B) zugesandt wird, daß

j) in diesem Endgerät (4A, 4B) die zweite Nachricht mit dem zeitweiligen Schlüssel entschlüsselt und dadurch die modifizierte Nachrichtennummer erhalten wird, und daß

k) in diesem Endgerät (4A, 4B) die modifizierte Nachrichtennummer mit einer erzeugten modifizierten Nachrichtennummer verglichen wird, wobei die erzeugte modifizierte Nachrichtennummer in dem Endgerät durch Anwendung der öffentlich bekannten Funktion auf die Nachrichtennummer selbst erzeugt wird.

**Claims**

1. Apparatus for checking the identity of a user of a communication system, a terminal unit (4A, 4B) being connected together with a security service station (8) via the communication system and serving for the coded or uncoded input of data which can be checked by the security service station (8), in order, depending on the result of the check, to clear the terminal unit (4A, 4B) for the transmission of working data, there being used for the data coding a public network code (PK.N) which differs from a secret network code (SK.N) necessary for the decoding, characterized in that

a) the terminal unit (4A, 4B) has

a1) a first central processing device (12) with a first memory (14) for the storage of a program, of the public network code (PK.N) and of variables,

a2) a card reader (16) for reading data from a personal data card (2) and for entering these data into the first memory (14), these data containing sensitive data,

a3) an input device (18) for entering personal identification information in the first memory (14), and

a4) a crypto-module (20) which is connected to the first central processing device (12) and which is designed so that it codes and decodes data received from the first memory (14), under the control of the first central processing device (12), in that

b) the security service station (8) has

b1) a second central processing device (32) with a second memory (34) for the storage of a program, of the secret network code (SK.N) and of variables,

b2) a second crypto-module (36) which is connected to the second central processing device (32) and which is designed so that it codes and decodes data obtained from the second memory (34) under the control of the second central processing device (32), and

b3) a comparator (38) connected to the second central processing device (32) for comparing transmitted personal identification information with transmitted personal reference identification information,

and in that
c) the communication system (6) transmits digital data containing personal identification reference information from the terminal unit (4A, 4B) to the security service station (8) and vice versa.

2. Apparatus according to Claim 1, characterized in that the first crypto-module (20) is designed so that it works as a public code system which uses a public network code (PK.N) in its coding mode and which works as a symmetrical system using a first code (DES) and a temporary second code (DES.TEMP) in its deconding mode, and in that the second crypto-module (36) is designed so that it works as a public code system which uses a secret network code (SK.N) in its decoding mode and which works as a symmetrical system using the temporary code (DES.TEMP) in its coding mode, with the result that the secret network code (SK.N) is correlated with the public network code (PK.N).

3. Apparatus according to Claim 2, characterized in that the symmetrical system is a DES system, in which the first code (DES) is a DES code and in which the temporary code (DES.TEMP) is a temporary DES code.

4. Apparatus according to Claim 2 or 3, characterized in that, to generate the temporary second code (DES.TEMP), a random-number generator (28) is provided, and in that the temporary second code (DES.TEMP) can be fed to the security service station (8) in a coded form.

5. Process for carrying out a check of the identity of a user of a communication system, a terminal unit (4A, 4B) being connected together with a security service station (8) via the communication system and serving for the coded or uncoded input of data which can be checked by the security service station (8), in order, depending on the result of the check, to clear the terminal unit (4A, 4B) for the transmission of working data, there being used for the data coding a public network code (PK.N) which differs from a secret network code (SK.N) necessary for the decoding, in particular with an apparatus according to one of the preceding claims, characterized in that

a) card information is read out from the personal data card and data of a personal feature are entered in a terminal unit (4A, 4B), the card information containing data of both a reference feature and of a first code, the data of both the reference feature and of the first code being coded by means of the public network code (PK.N) and a first cryptogram thereby being formed, in that

b) a temporary code and a message number are generated in the terminal unit (4A, 4B), in that

c) the data of the personal feature, the first cryptogram contained in the card information, the message number and the temporary code are coded in the terminal unit (4A, 4B) by means of the public network code (PK.N) and a first message is thereby formed, in that

d) the first message is sent to the security service station (8) by the communication system (6), in that

e) the first message containing the first cryptogram is decoded by means of the secret network code (SK.N), with the result that the first code, the message number, the data of the feature, the data of the reference feature and temporary code are obtained, the secret network code (SK.N) being correlated with the public network code (PK.N), in that

f) the data of the feature and of the reference feature are compared with one another in the security service station (8), in that

g) a modified message number is generated in the security service station (8) by applying a publically known function to the message number, in that

h) the modified message number and the first code are coded in the security service station (8) by means of the temporary code and a second message is thereby formed, in that

i) the second messsage is sent to the terminal unit (4A, 4B) via the communication system (6), in that

j) the second message is decoded by means of the temporary code in this terminal unit (4A, 4B) and the modified message number is thereby obtained, and in that

k) in this terminal unit (4A, 4B) the modified message number is compared with a generated modified message number, the generated modified message number being generated in the terminal unit by applying the publically known function to the message number itself.

**Revendications**

1. Appareil pour contrôler l'identité d'un utilisateur d'un système de communication, dans lequel un appareil terminal (4A, 4B) est raccordé par l'intermédiaire d'un système de communication à un poste de service de sécurité (8) et est utilisé pour réaliser l'introduction codée ou non codée de données qui peuvent être contrôlées par le poste de sécurité (8), afin d'autoriser, en fonction du résultat du contrôle, l'appareil terminal (4A, 4B) pour la transmission de données de travail, et dans lequel on utilise, pour le codage des données, un code réseau public (PK.N), qui diffère d'un code réseau secret (SK.N) nécessaire pour le décodage, caractérisé par le fait que

a) l'appareil terminal (4A, 4B) contient

a1) un premier dispositif central de traitement (12) comprenant une première mémoire (14) servant à mémoriser un programme, le code réseau public (PK.N) et des variables,

a2) un lecteur de carte (16) servant à lire des données à partir d'une carte personnelle de données (2) et à introduire ces données dans la première mémoire (149), ces données contenant des données sensitives,

a3) un dispositif d'entrée (18) servant à introduire une information personnelle d'identification dans la première mémoire (14), et

a4) un module de cryptage (20), qui est relié au premier dispositif central de traitement (12) et est agencé de manière à coder et décoder des données reçues à partir de la première mémoire (14), sous la commande du premier dispositif central de traitement (12), et que

b) le poste de service de sécurité (8) contient

b1) un second dispositif central de traitement (32) comportant une seconde mémoire (34) servant à mémoriser un programme, le code réseau secret (SK.N) et des variables,

b2) un second module de cryptage (36), relié au second dispositif central de traitement (32) et agencé de telle sorte qu'il code et décode des données reçues à partir de la seconde mémoire (34), sous la commande du second dispositif central de traitement (32), et

b3) un comparateur (38) relié au second dispositif central de traitement (32) et servant à comparer une information personnelle transmise d'identification à une information personnelle transmise d'identification de référence,

et que

c) le système de communication (6) transmet des données numériques, contenant une information personnelle de référence d'identification, depuis l'appareil terminal (4A, 4B) en direction du poste (8) du service de sécurité et inversement.

2. Appareil suivant la revendication 1, caractérisé par le fait que le premier module de cryptage (20) est agencé de manière à fonctionner à la manière d'un système de codage public qui utilise un code réseau public (PK.N) dans son mode de codage, et fonctionne en tant que système symétrique qui utilise un second code (DES) et un second code temporel (DES.TEMP) dans son mode de décodage, et que le second module de cryptage (36) est agencé de manière à fonctionner à la façon d'un système de codage public qui utilise un code réseau secret (SK.N) dans son mode de décodage, et fonctionne en tant que système symétrique qui utilise le code temporaire (DES. TEMP) dans son mode de codage, ce qui a pour effet que le code réseau secret (SK.N) est corrélé au code réseau public (PK.N).

3. Appareil suivant la revendication 2, caractérisé par le fait que le réseau symétrique est un système DES, dans lequel le premier code (DES) est un code DES et dans lequel le code temporaire (DES.TEMP) est un code DES temporaire.

4. Appareil suivant la revendication 2 ou 3, caractérisé par le fait que pour la production du second code temporaire (DES.TEMP), il est prévu un générateur de nombres aléatoires (28) et que le second code temporaire (DES.TEMP) peut être envoyé sous forme codée au poste de service de sécurité (8).

5. Procédé pour la mise en œuvre d'un contrôle d'identification d'un utilisateur d'un système de communication, selon lequel un appareil terminal (4A, 4B) est raccordé par l'intermédiaire d'un système de communication à un poste de service de sécurité (8) et est utilisé pour réaliser l'introduction codée ou non codée de données qui peuvent être contrôlées par le poste de sécurité (8), afin d'autoriser, en fonction du résultat du contrôle, l'appareil terminal (4A, 4B) pour la transmission de données de travail, et selon lequel on utilise, pour le codage des données, un code réseau public (PK.N), qui diffère d'un code réseau secret (SK.N) nécessaire pour le décodage, mettant en œuvre notamment un appareil selon l'une des revendications précédentes, caractérisé par le fait que

a) une information de carte est lue à partir de la carte personnelle de données et des données d'une caractéristique personnelle sont introduites dans un appareil terminal (4A, 4B), auquel cas l'information de la carte contient aussi bien des données d'une caractéristique de référence qu'un premier code, et aussi bien les données de la caractéristique de référence que celles du premier code sont codées avec le code réseau public (PK.N) et qu'un premier cryptogramme est formé de cette manière,

b) qu'un code temporaire et un nombre d'informations sont produits dans l'appareil terminal (4A, 4B),

c) que les données de la caractéristique personnelle, le premier cryptogramme contenant l'information de la carte, le nombre d'informations et le code temporaire sont codés dans l'appareil terminal (4A, 4B) à l'aide du code réseau public (PK.N) et qu'une première information est formée de cette manière,

d) que la première information est envoyée par l'intermédiaire du système de communication (6) au poste de service de sécurité (8),

e) que la première information, qui contient le premier cryptogramme, est décodée à l'aide du code réseau secret (SK.N) ce qui permet d'obtenir le premier code, le nombre d'informations, les données de la caractéristique, les données de la caractèristique de référence et le code temporaire, le code réseau secret (SK.N) étant corrélé au code réseau public (PK.N),

f) que les données de la cractéristique et de la caractéristique de référence sont comparées entre elles dans le poste de service de sécurité (8),

g) que, dans le poste de service de sécurité (8), un nombre modifié d'informations est produit grâce à l'application d'une fonction connue de façon publique au nombre d'informations,

h) que, dans le poste de service de sécurité (8), le nombre modifié d'informations et le premier code sont codés au moyen du code temporaire et qu'une seconde information est formée de cette manière,

i) que la seconde information est envoyée, par l'intermédiaire du système de communication (6), l'appareil terminal (4A, 4B),

j) que, dans cet appareil terminal (4A, 4B), la seconde information est codée au moyen du code temporaire et que le nombre modifié d'informations est obtenu de cette manière, et

k) que, dans cet appareil terminal (4A, 4B), le nombre modifié d'informations est comparé à un nombre modifié produit d'informations, le nombre modifié produit d'informations étant produit dans l'appareil terminal grâce à l'application de la fonction, connue de façon publique, au nombre d'informations.

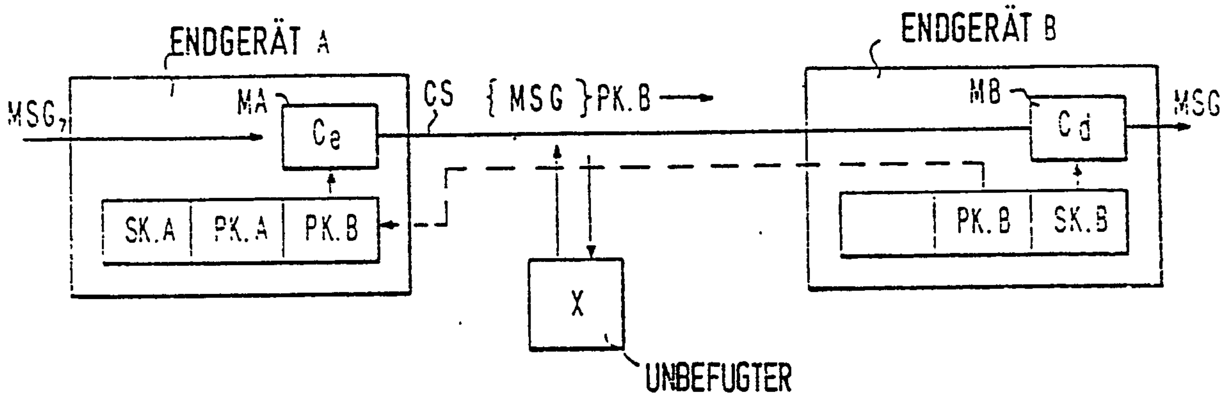


FIG. 1 STAND D.TECHNIK

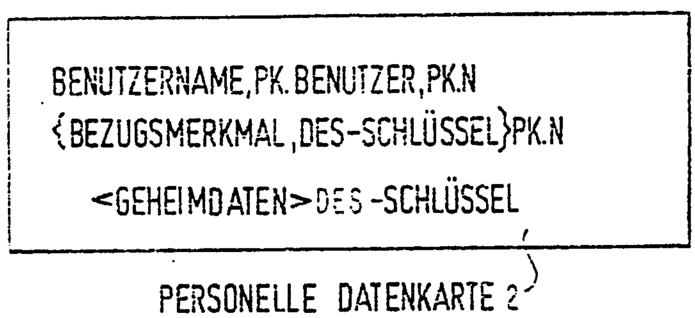


FIG. 4

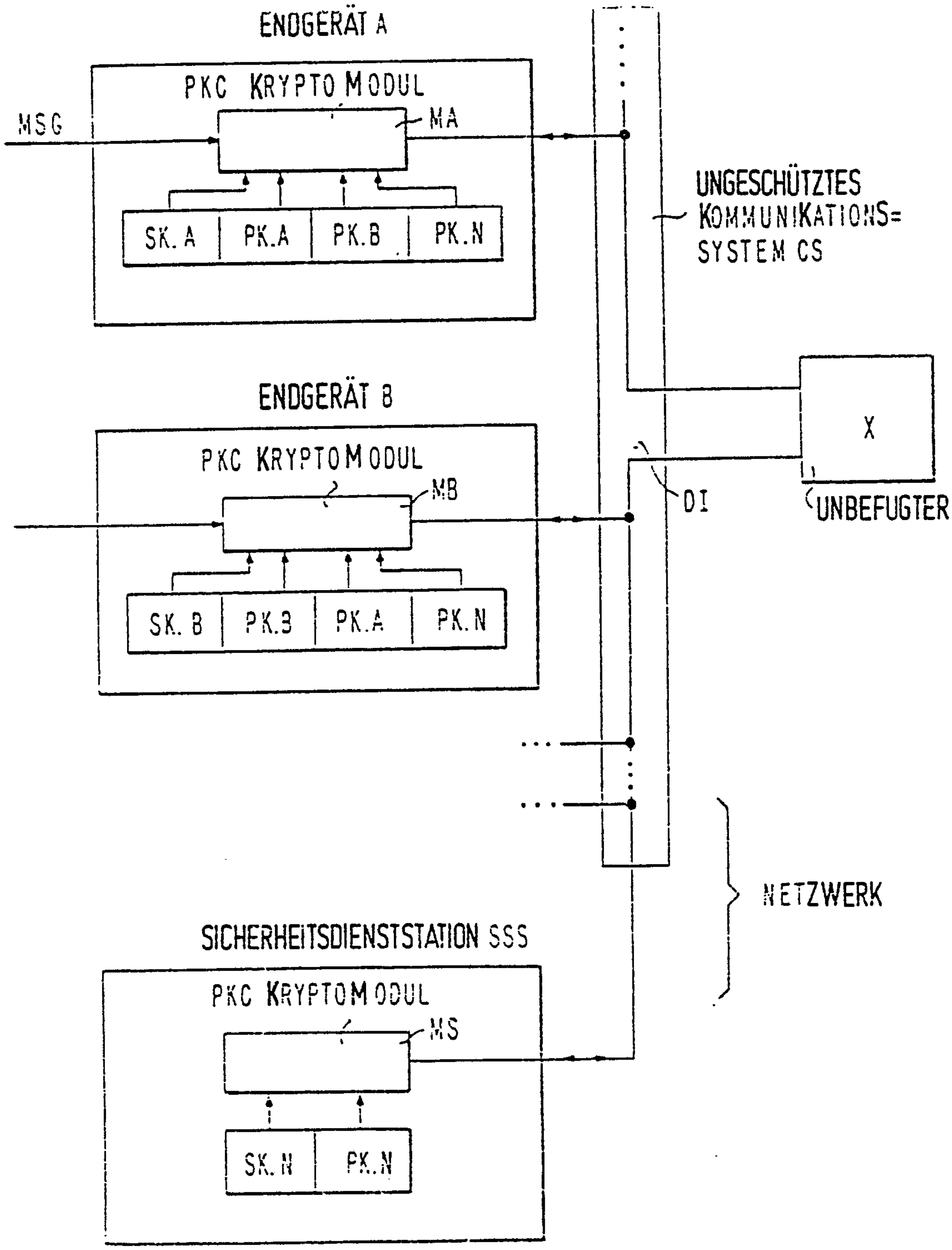
ENDGERÄT A
PKC KRYPTO MODUL
MSG
MA
SK. A
PK.A
PK.B
PK.N
UNGESCHÜTZTES KOMMUNIKATIONS= SYSTEM CS
X
UNBEFUGTER
DI
ENDGERÄT B
PKC KRYPTO MODUL
MB
SK. B
PK.B
PK.A
PK.N
NETZWERK
SICHERHEITSDIENSTSTATION SSS
PKC KRYPTO MODUL
MS
SK. N
PK.N

FIG. 2

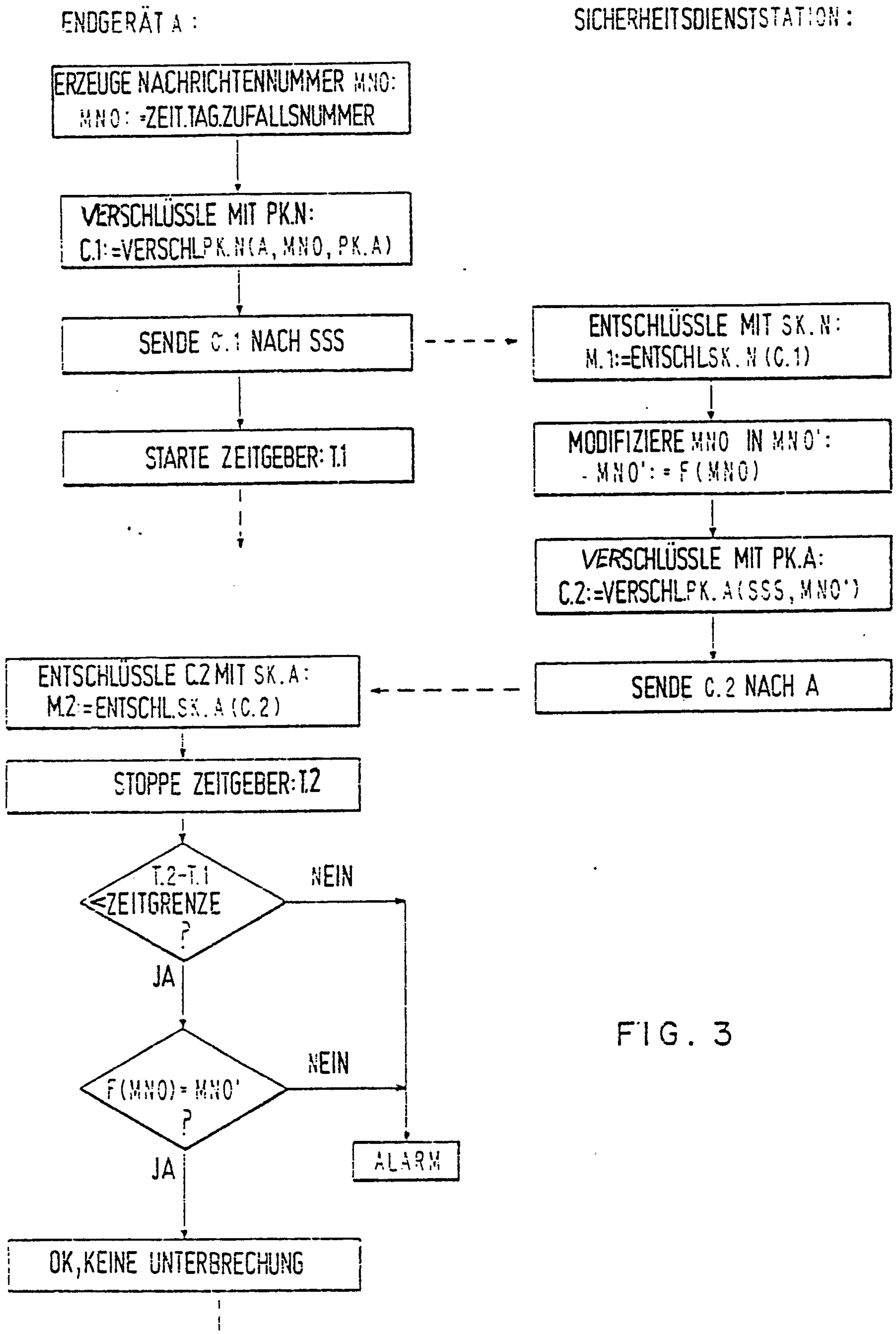
ENDGERÄT A :
SICHERHEITSDIENSTSTATION :
ERZEUGE NACHRICHTENNUMMER MNO:
MNO: =ZEIT.TAG.ZUFALLSNUMMER
VERSCHLÜSSLE MIT PK.N:
C.1:=VERSCHL.PK.N(A, MNO, PK.A)
SENDE C.1 NACH SSS
ENTSCHLÜSSLE MIT SK.N:
M.1:=ENTSCHL.SK.N(C.1)
STARTE ZEITGEBER: T.1
MODIFIZIERE MNO IN MNO':
MNO': = F(MNO)
VERSCHLÜSSLE MIT PK.A:
C.2:=VERSCHL.PK.A(SSS, MNO')
ENTSCHLÜSSLE C.2 MIT SK.A:
M.2:=ENTSCHL.SK.A(C.2)
SENDE C.2 NACH A
STOPPE ZEITGEBER: T.2
T.2-T.1
<=ZEITGRENZE
?
NEIN
JA
F(MNO)=MNO'
?
NEIN
JA
ALARM
OK, KEINE UNTERBRECHUNG

FIG. 3

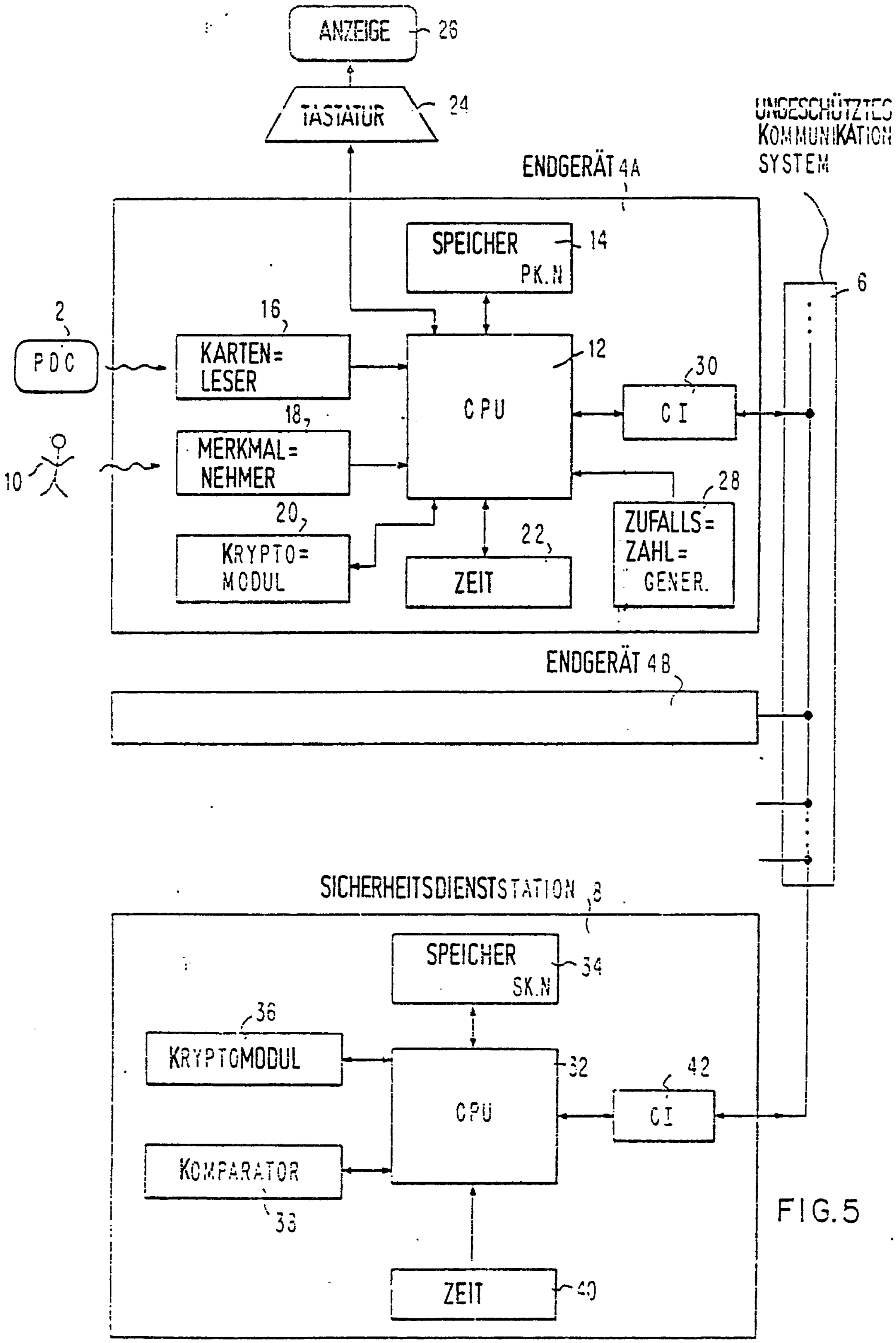
ANZEIGE
26
TASTATUR
24
ENDGERÄT 4A
UNGESCHÜTZTES KOMMUNIKATION SYSTEM
SPEICHER PK.N
14
6
2
16
PDC
KARTEN= LESER
CPU
12
30
CI
18
10
MERKMAL= NEHMER
28
20
22
ZUFALLS= ZAHL= GENER.
KRYPTO= MODUL
ZEIT
ENDGERÄT 4B
SICHERHEITSDIENSTSTATION 8
SPEICHER SK.N
34
36
KRYPTOMODUL
32
42
CPU
CI
KOMPARATOR
38
ZEIT
40

FIG.5

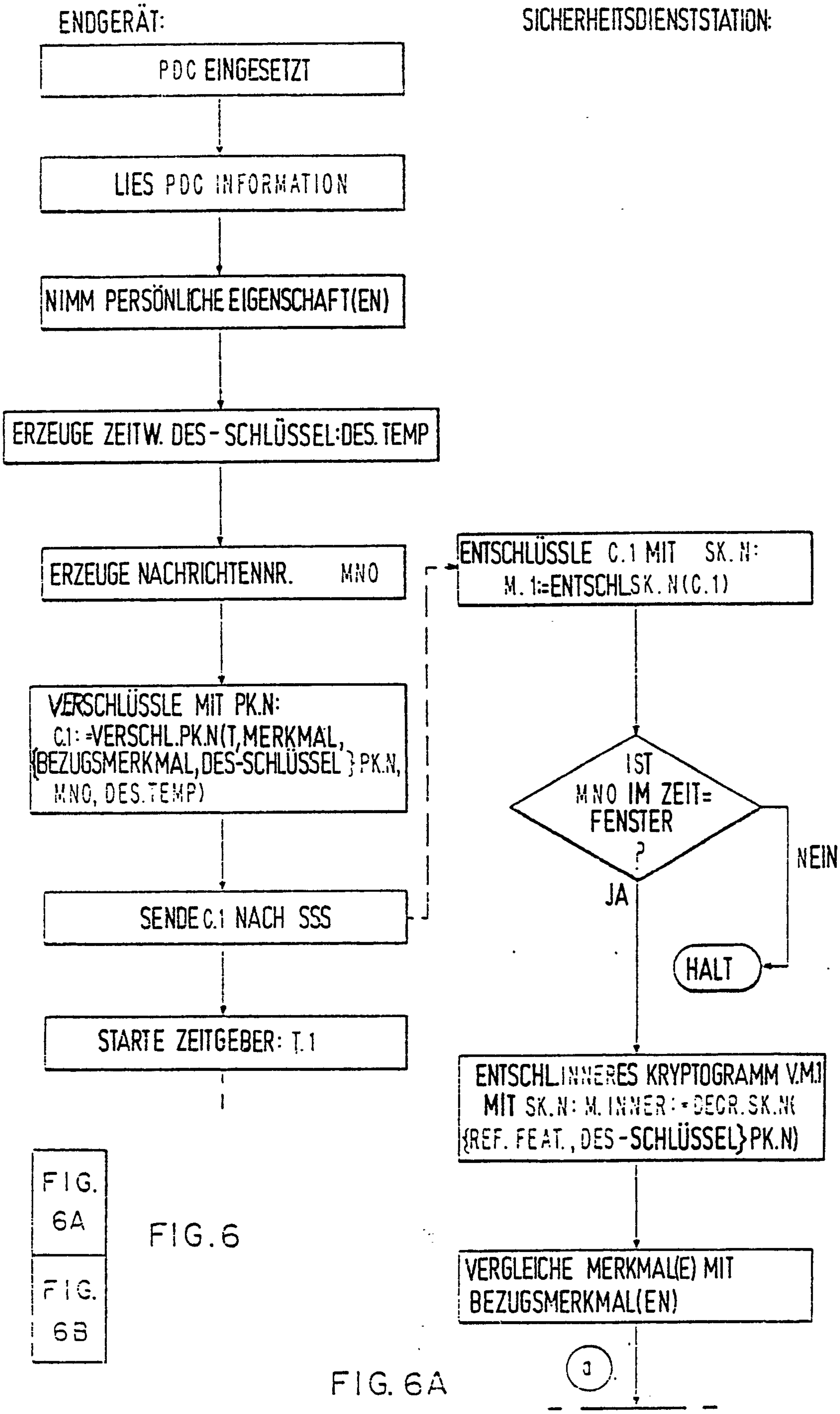
ENDGERÄT:
SICHERHEITSDIENSTSTATION:
PDC EINGESETZT
LIES PDC INFORMATION
NIMM PERSÖNLICHE EIGENSCHAFT(EN)
ERZEUGE ZEITW. DES-SCHLÜSSEL:DES.TEMP
ERZEUGE NACHRICHTENNR. MNO
VERSCHLÜSSLE MIT PK.N:
C.1: =VERSCHL.PK.N(T,MERKMAL,
{BEZUGSMERKMAL,DES-SCHLÜSSEL}PK.N,
MNO, DES.TEMP)
SENDE C.1 NACH SSS
STARTE ZEITGEBER: T.1
ENTSCHLÜSSLE C.1 MIT SK.N:
M.1:=ENTSCHL.SK.N(C.1)
IST
MNO IM ZEIT=
FENSTER
?
NEIN
JA
HALT
ENTSCHL.INNERES KRYPTOGRAMM V.M.1
MIT SK.N: M.INNER:=DECR.SK.N(
{REF. FEAT., DES-SCHLÜSSEL}PK.N)
VERGLEICHE MERKMAL(E) MIT
BEZUGSMERKMAL(EN)
1
FIG. 6A
FIG. 6B

FIG. 6

FIG. 6A

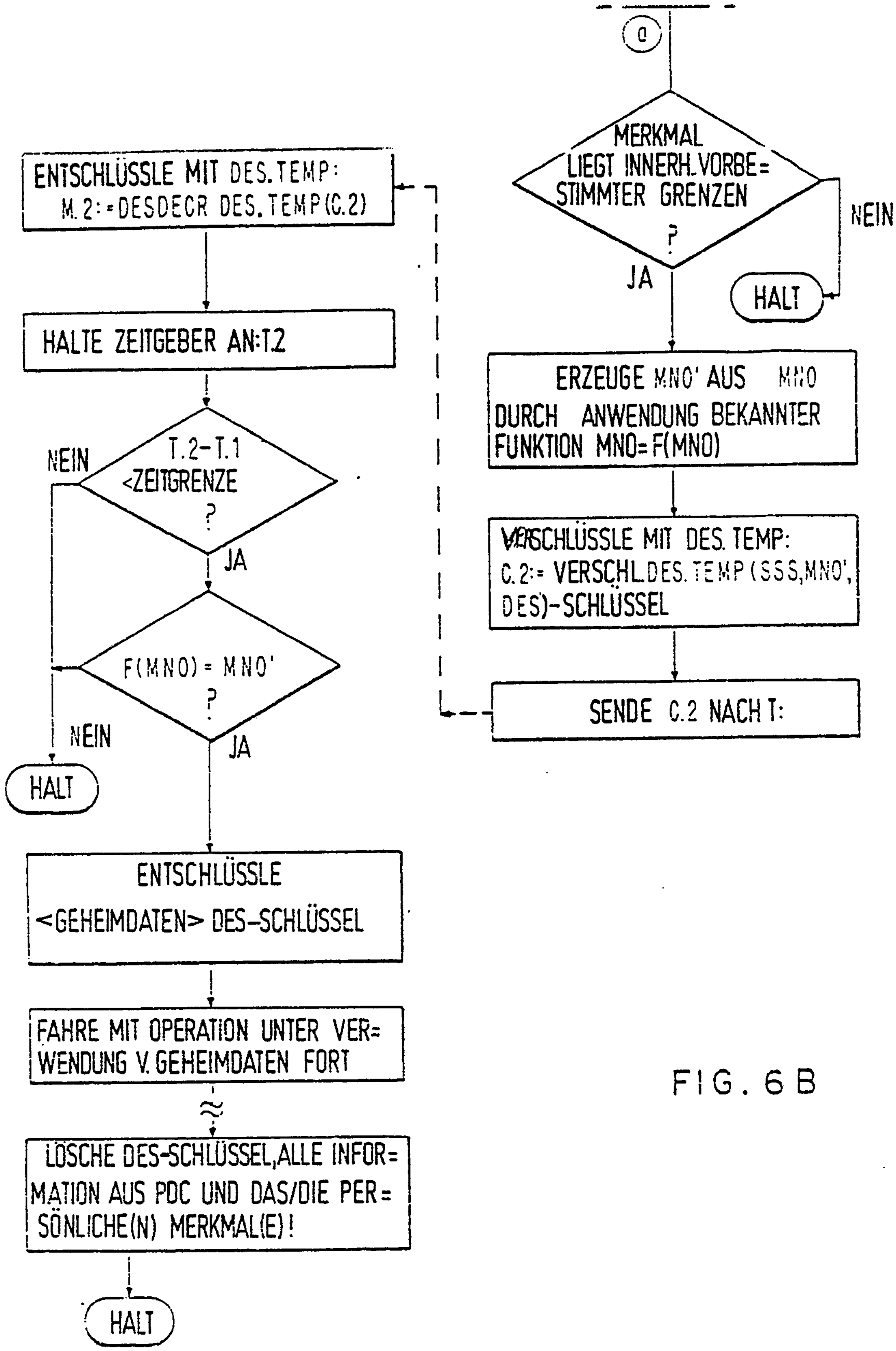
ENTSCHLÜSSLE MIT DES.TEMP:
M.2:=DESDECR DES.TEMP(C.2)
HALTE ZEITGEBER AN:T.2
T.2-T.1 <ZEITGRENZE ?
NEIN
JA
F(MNO) = MNO' ?
NEIN
JA
HALT
ENTSCHLÜSSLE <GEHEIMDATEN> DES-SCHLÜSSEL
FAHRE MIT OPERATION UNTER VERWENDUNG V. GEHEIMDATEN FORT
LÖSCHE DES-SCHLÜSSEL, ALLE INFORMATION AUS PDC UND DAS/DIE PERSÖNLICHE(N) MERKMAL(E)!
HALT
a
MERKMAL LIEGT INNERH. VORBESTIMMTER GRENZEN ?
NEIN
JA
HALT
ERZEUGE MNO' AUS MNO DURCH ANWENDUNG BEKANNTER FUNKTION MNO=F(MNO)
VERSCHLÜSSLE MIT DES.TEMP:
C.2:= VERSCHL.DES.TEMP(SSS,MNO',DES)-SCHLÜSSEL
SENDE C.2 NACH T:

FIG. 6B